# EUROPEAN PATENT APPLICATION

(11) **EP 2 768 164 A1**
(43) Date of publication of application: **20.08.2014**
(21) Application number: 14154334.8
(22) Date of filing: 07.02.2014
(51) Int. Cl.: H04B 10/516

(54) **System and method for filtering an optical signal to avoid fading and to optimize linearity**

(30) Priority: 14.02.2013 US 201313767808
(71) Applicant: Titan Photonics Inc., Fremont, CA 94539 (US)
(72) Inventor: Sun, Chen-Kuo, Escondido, CA California 92029 (US)
(74) Representative: Curley, Donnacha John

(57) **Abstract**

A system for transmitting an optical signal over a fiber optic includes a terminal for generating the optical signal. Due to its modulation, the optical signal includes a carrier having a wavelength "λ", with an upper sideband and a lower sideband. A tuner is connected with the terminal to adjust the wavelength "λ" of the carrier of the optical signal relative to a band pass filter. The purpose here is two-fold. For one, this adjustment eliminates a sideband of the optical signal, to avoid fading, and it suppresses the carrier of the optical signal, to enhance the OMI while maintaining the linearity of the signal.

## Description

### FIELD OF THE INVENTION

The present invention pertains generally to systems and methods for filtering optical signals. More particularly, the present invention pertains to systems and methods that tune an optical signal relative to a band pass filter, to improve the transmission quality of the optical signal. The present invention is particularly, but not exclusively, useful for tuning optical signals relative to a band pass filter in order to eliminate a sideband of the optical signal and thereby avoid fading, and to simultaneously suppress the carrier in order to enhance the Optical Modulation Index (OMI) for the optical signal.

### BACKGROUND OF THE INVENTION

Whenever a light beam is used as a carrier for a signal, and the light beam is transmitted through an optical fiber, several different phenomena occur which are associated with the transmission. For one, there may be interference between the light beam and one or more other light beams as they are being simultaneously transmitted over the optical fiber. For another, even a single light beam may cause its own interference as it passes through an optical fiber. Of particular interest in this latter case is the phenomenon known as "fading."

It is well known that the modulation of a signal onto a light beam having a carrier wavelength "λ" will result in both an upper and a lower sideband, respectively "λₕᵢ" and "λ_{low}". Further, when this modulated optical beam "λ" is transmitted over an optical fiber, both of the sidebands ("λₕᵢ" and "λ_{low}") are each subject to a phase shift that is caused by their interaction with the optical fiber (i.e. dispersion). Fading will then occur when the different phases of the sidebands, "λₕᵢ" and "λ_{low}", interfere with each other. In a worst case scenario, fading can result in a signal null. This, of course, is to be avoided.

Another aspect of major interest for the transmission of an optical signal over an optical fiber is the preservation of the system's linearity. Specifically, it is of the utmost importance that the system's output varies directly with its input. On this point, a widely used measure for the linear operation of an optical system is a factor known as the Optical Modulation Index (OMI). Essentially, OMI is a measure of how much the modulation signal affects the system output. A consequence here is that the OMI can be used to establish an optimum operating point. This is done, however, with the understanding that beyond this optimum operating point the system experiences increased nonlinearities. In the specific case of a modulated optical signal, OMI is determined by the ratio of a sideband of the signal (e.g. "λ_{low}") to the carrier wavelength ("λ") of the signal (OMI ∼ λ_{low}/λ).

In addition to the above considerations regarding the transmission of an optical signal through an optical fiber, it is important to note that changes in the ambient temperature of the optical signal generator (e.g. E/O converter) pose yet another consideration. Specifically, changes in the ambient temperature of the optical signal generator will cause shifts of the carrier wavelength "λ" of the optical signal. On the other hand, band pass filters are typically insensitive to temperature changes. Thus, in their relationship with each other, the band pass filter effectively remains stationary, although changes in "λ" may occur due to changes in temperature. For this reason, in order to maintain a fixed relationship between the band pass filter and the carrier "λ", changes in the ambient temperature of the optical signal need to be accounted for.

With the above in mind, it is an object of the present invention to provide a system and method for tuning optical signals by using a band pass filter to eliminate a sideband of the optical signal, and thereby avoid fading. Another object of the present invention is to suppress the carrier of an optical signal, simultaneously with the elimination of a sideband, in order to enhance the Optical Modulation Index (OMI) for the optical signal, while maintaining system linearity. Yet another object of the present invention is to provide a system and method for optimizing the transmission of an optical signal over an optical fiber that is simple to assemble, is easy to implement and is comparatively cost effective.

### SUMMARY OF THE INVENTION

A system for filtering an optical signal for a transmission of the signal over a fiber optic includes a terminal for generating the optical signal. Specifically, the optical signal will have a carrier of wavelength "λ", and it will have both an upper sideband "λₕᵢ" and a lower sideband ""λ_{low}". Additionally, the system also includes a band pass filter which is defined by a pass band limit. Like other band pass filters, the pass band limit of the filter for the present invention establishes a transmit decibel (dB) level that is based on changes in the wavelength ("λ") of the optical signal (i.e. the carrier). In detail, the pass band limit of the filter is preferably characterized by a central region having a substantially flat pass band upper limit having a substantially constant dB value greater than 25 dB. Further, this central region is located between a lower region with a positively sloped pass band limit, and an upper region with a negatively sloped pass band limit.

In accordance with the present invention, a tuner is connected with an E/O converter at the terminal to vary "λ" of the optical signal. Specifically, this is done in order to position and maintain the carrier in the preselected region of the filter. Further, for fine tuning, the tuner is connected with a thermometer at the terminal for the purpose of measuring an ambient temperature of the optical signal as it is generated by the E/O converter for transit through the fiber optic. With this connection, the tuner can account for temperature changes that may affect the position of the carrier "λ", relative to the filter. Preferably, the tuner is a Thermo-Electric Cooler (TEC) of a type well known in the art.

As envisioned for the present invention, the carrier "λ" of the optical signal is preferably positioned in a region of the band pass filter which has a sloped pass band limit. Most likely, the carrier "λ" will be positioned in the upper region of the pass band limit where the limit is negatively sloped. The carrier "λ" can then be positioned by the tuner in the upper region to accomplish two functional purposes. For one, the carrier "λ" can be positioned to eliminate a sideband of the optical signal (e.g. "λₕᵢ"), in order to thereby avoid fading. For another, it can be positioned to suppress the carrier "λ", to enhance the Optical Modulation Index (OMI) for the optical signal while maintaining system linearity.

As an added feature, the system of the present invention may also include an optical amplifier for amplifying the transmitted (i.e. filtered) optical signal. For instance, the optical amplifier may be an Erbium Doped Fiber Amplifier (EDFA) of a type well known in the pertinent art.

The application is to be considered to extend to the following numbered statements:
1. A system for filtering an optical signal for transmission of the signal over a fiber optic which comprises:
   a terminal for generating the optical signal, wherein the optical signal includes a carrier having a wavelength "λ", with an upper sideband and a lower sideband;
   a filter defined by a pass band limit, wherein the limit establishes a transmit decibel (dB) level based on changes in wavelength and is characterized by a central region with a substantially flat pass band limit located between a lower region with a positively sloped pass band limit, and an upper region with a negatively sloped pass band limit; and
   a tuner connected with the terminal for positioning the carrier in a preselected region of the filter having a sloped pass band limit to eliminate a sideband of the optical signal to avoid fading, and to suppress the carrier to enhance the Optical Modulation Index (OMI) for the optical signal.
2. A system as recited in statement 1 wherein the terminal comprises:
   a modem for generating a Radio Frequency (RF) signal; and
   an Electrical to Optical (E/O) converter for converting the RF signal to an optical signal having the carrier "λ".
3. A system as recited in statement 2 wherein the tuner is a Thermo-Electric Cooler (TEC) and is connected with the E/O converter to vary "λ" of the optical signal to position and maintain the carrier in the preselected region of the filter.
4. A system as recited in statement 1 wherein the preselected region is the upper region with a negatively sloped pass band limit.
5. A system as recited in statement 1 wherein the negatively sloped pass band limit of the upper region is characterized by a decrease in dB level, with an increase in wavelength "λ" of the carrier, to suppress the dB level of the carrier in the optical signal.
6. A system as recited in statement 1 further comprising an optical amplifier for amplifying the transmitted optical signal.
7. A system as recited in statement 6 wherein the amplifier is an Erbium Doped Fiber Amplifier (EDFA).
8. A system as recited in statement 1 wherein the pass band upper limit of the central region is flat and has a substantially constant dB value greater than 25 dB.
9. A system as recited in statement 8 wherein the slope of the upper region of the filter causes around 1.4 dB loss in the carrier per 0.01 nm increase in the wavelength "λ" of the carrier.
10. A system as recited in statement 1 wherein the carrier is suppressed by the filter to obtain an improved OMI and an improved linearity for the optical signal transmitted by the system.
11. A system as recited in statement 1 wherein the modem is a digitized synthesizer.
12. A system for transmitting an optical signal which comprises:
   a terminal for generating the optical signal, wherein the optical signal includes a carrier having a wavelength "λ", with an upper sideband and a lower sideband;
   a thermometer connected to the terminal for measuring an ambient temperature of the O/E converter;
   a filter defined by a pass band limit, wherein the filter is positioned to receive the optical signal from the terminal, and wherein the pass band limit establishes a transmit decibel (dB) level depending on the wavelength "λ" of the carrier;
   a tuner connected with the terminal for varying the wavelength "λ" of the carrier of the optical signal in response to changes in the ambient temperature of the O/E converter; and
   a computer connected to the thermometer for comparing an ambient temperature of the O/E converter with a desired temperature set point to generate an error signal, and wherein the computer is connected to the tuner to minimize the error signal by varying the ambient temperature of the O/E converter and the corresponding carrier wavelength "λ" of the optical signal to position the carrier of the optical signal relative to the pass band limit of the filter to eliminate a sideband of the optical signal and avoid fading, and to suppress the carrier of the optical signal to enhance the Optical Modulation Index (OMI) and linearity of the optical signal.
13. A system as recited in statement 12 where in the tuner is a Thermo-Electric Cooler (TEC).
14. A system as recited in statement 12 further comprising an optical amplifier for amplifying the transmitted optical signal.
15. A system as recited in statement 12 wherein the filter is defined by a pass band limit, wherein the limit establishes a transmit decibel (dB) level based on changes in wavelength of the optical signal and is characterized by a central region with a substantially flat pass band limit located between a lower region with a positively sloped pass band limit, and an upper region with a negatively sloped pass band limit.
16. A system as recited in statement 15 wherein the pass band limit of the central region is flat and has a substantially constant dB value greater than 25 dB, and wherein the slope of the upper region of the filter causes around 1.4 dB loss in the carrier per 0.01 nm increase in the wavelength "λ" of the carrier.
17. A method for transmitting an optical signal which comprises the steps of:
   generating the optical signal, wherein the optical signal includes a carrier having a wavelength "λ", with an upper sideband and a lower sideband;
   measuring an ambient temperature of the O/E converter;
   defining a pass band limit for a filter, wherein the pass band limit establishes a transmit decibel (dB) level for the optical signal depending on the wavelength "λ" of the carrier;
   positioning the filter to receive the optical signal; and
   varying the wavelength "λ" of the carrier of the optical signal in response to changes in the ambient temperature of the E/O converter to position the carrier of the optical signal relative to the pass band limit of the filter to eliminate a sideband of the optical signal to avoid fading, and to suppress the carrier of the optical signal to enhance the Optical Modulation Index (OMI) for the optical signal.
18. A method as recited in statement 17 wherein the generating step further comprises the steps of:
   providing a modem for generating a Radio Frequency (RF) signal; and
   using an Electrical to Optical (E/O) converter for converting the RF signal to the optical signal having the carrier "λ".
19. A method as recited in statement 18 wherein the defining step establishes the pass band limit with a central region having a substantially flat pass band limit located between a lower region with a positively sloped pass band limit, and an upper region with a negatively sloped pass band limit.
20. A method as recited in statement 19 wherein the pass upper band limit of the central region is flat and has a substantially constant dB value greater than 25 dB, and wherein the slope of the upper region of the filter causes around 1.4 dB loss in the carrier per 0.01 nm increase in the wavelength "λ" of the carrier.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Fig. 1 is a schematic presentation of functional components of the present invention in an operational configuration;
Fig. 2 is an illustrated representation of an optical signal positioned relative to a band pass filter for filtering the optical signal in accordance with the present invention; and
Fig. 3 is a generalized closed loop feedback control diagram indicating the control variables that are used to maintain proper filtering of an optical signal in accordance with the present invention.

### DESCRIPTION OF THE PREFERRED EMBODIMENTS

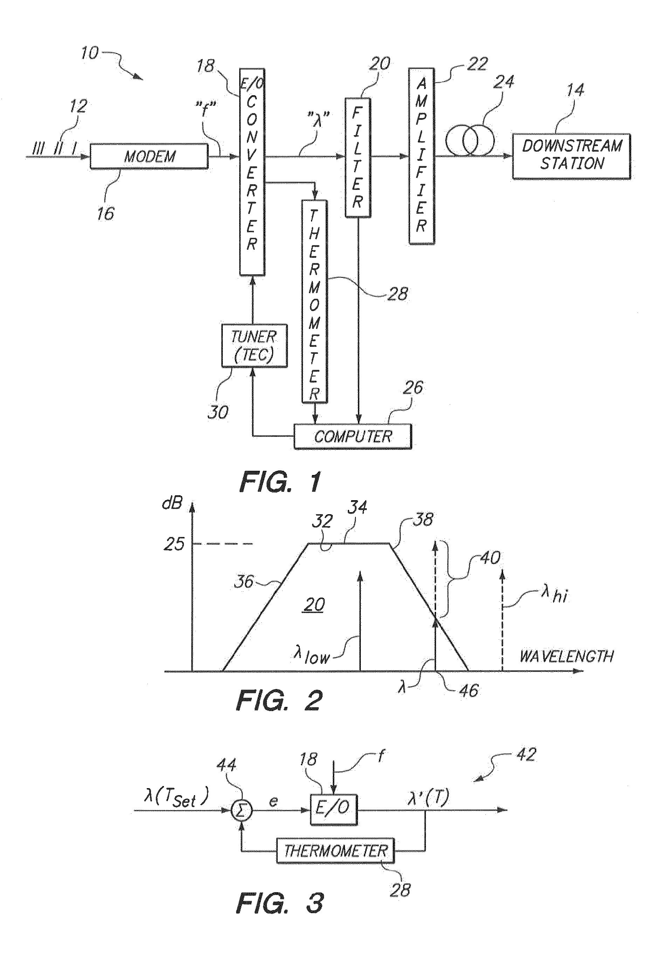

Referring initially to Fig. 1, a system in accordance with the present invention is shown and is generally designated 10. As shown, the system 10 is intended to transmit a digital signal 12 to a downstream station 14. To do this, the system 10 incorporates a modem 16 that first converts the digital signal 12 to a Radio Frequency (RF) signal "f". An Electrical to Optical E/O converter 18 then converts the RF signal "f" into an optical signal having a carrier wavelength "λ", with an upper sideband "λₕᵢ" and a lower sideband "λ_{low}". In both instances, the conversion from digital to RF, and the conversion from RF to optical, can be accomplished in any of the various ways presently known in the pertinent art. Collectively, the modem 16 and the E/O converter 18 function together as a terminal for generating the optical signal "λ".

Once the optical signal "λ" has been generated, a filter 20 is used for two different functional purposes. For one, the filter 20 is used to eliminate one of the sidebands (either "λₕᵢ" or "λ_{low}"). For the other, the filter 20 is used to suppress the carrier "λ" itself. The optical signal with a suppressed carrier "λ", and an eliminated sideband (e.g. "λₕᵢ"), may then be amplified by an optical amplifier 22, and introduced into a fiber optic 24 for transmission to the downstream station 14. If desired, the present invention envisions that the optical amplifier 22 can be an Erbium Doped Fiber Amplifier (EDFA) which is incorporated into the fiber optic 24. In any event, it is to be appreciated that the optical amplifier 22 can be of any type well known in the pertinent art, and that its use is optional.

Still referring to Fig. 1 it will be seen that a computer 26 is connected with the filter 20. Specifically, with this connection the computer 26 is provided with input from the filter 20 which includes information about the operational parameters and functional characteristics of the filter 20. Fig. 1 also shows that the computer 26 is connected with a thermometer 28, and that the thermometer 28 is connected with the output of the E/O converter 18. With this connection, the computer 26 is provided with input from the E/O converter 18, via the thermometer 28, pertaining to the temperature of the E/O converter 18. This temperature of the E/O converter is thus the ambient temperature of the carrier "λ" of the optical signal.

Fig. 1 also shows that a tuner 30 interconnects the computer 26 with the E/O converter 18. With this connection, the computer 26 is able to control the tuner 30. In particular, based on an ambient temperature that is sensed by the thermometer 28, the tuner 30 alters the E/O converter 18 for the purpose of positioning the carrier wavelength "λ" of the optical signal relative to the filter 20. For this purpose, the tuner 30 is preferably of a type well known in the pertinent art, such as a Thermo-Electric Cooler (TEC).

The operational parameters and functional characteristics of the filter 20 are best appreciated with reference to Fig. 2. There it will be seen that the filter 20 is essentially defined by a pass band limit 32 which establishes a transmit decibel (dB) level that is based on the wavelength "λ" of an optical signal. As shown, the pass band limit 32 is characterized, in part, by a central region 34 which is generally flat. More specifically, the flat portion of pass band limit 32 in the central region 34 will preferably have a substantially constant dB value that is greater than about 25 dB.

In Fig. 2, the central region 34 of pass band limit 32 is shown to be located between a lower region 36 and an upper region 38. As is typical of most conventional pass band filters, the lower region 36 of filter 20 has a positively sloped pass band limit 32, and the upper region 38 has a negatively sloped pass band limit 32. With specific reference to the upper region 38, the negatively sloped pass band limit 32 of this upper region 38 is characterized by a decrease in dB level with an increase in wavelength "λ". By way of example, in an operational context, the upper region 38 of the filter 20 will cause an approximately 1.4 dB loss in the carrier per 0.01 nm increase in the wavelength "λ". Similarly, the upper region 38 will cause an approximately 1.4 dB increase in the carrier per 0.01 nm decrease in the wavelength "λ".

For an operation of the system 10, specific information concerning the operational parameters and functional characteristics of the filter 20 are provided to the computer 26. The tuner 30 is then operated to position the carrier (wavelength "λ") relative to the band pass limit 32 of the filter 20. Importantly, in this operation, the tuner 30 initially positions the carrier (wavelength "λ") under either the upper region 38 or the lower region 36 of the band pass limit 32 of the filter 20.

For purposes of this disclosure, the carrier of the optical signal (wavelength "λ") is shown positioned under the upper region 38 of the filter 20 in Fig. 2. Importantly, Fig. 2 indicates there are two consequences that result from this positioning. For one, depending on the actual position of the carrier "λ" relative to the upper region 38 of filter 20, the carrier "λ" will be suppressed by a determinable decrement 40. For another, the upper sideband "λₕᵢ" will be eliminated. Thereafter, this circumstance (i.e. the relationship between carrier "λ" and filter 20) can be maintained by fine tuning the E/O converter 18 (i.e. adjusting "λ") with the tuner 30.

Because wavelength "λ" is a function of temperature, i.e. "λ(T)", fine tuning of the optical signal (carrier "λ") can be accomplished by monitoring the ambient temperature of the E/O converter 18 with the thermometer 28. This ambient temperature is then provided by the thermometer 28 to the computer 26. In turn, the computer 26 causes the tuner 30 to adjust the wavelength "λ" of the optical signal with the E/O converter 18 in a manner that will appropriately position the optical signal relative to the filter 20. The purpose here is two-fold. For one, the optical signal ("λ") is positioned to eliminate a sideband of the optical signal, to thereby avoid fading. For another, the optical signal ("λ") is positioned to suppress the carrier, to thereby enhance the Optical Modulation Index (OMI) for the optical signal while maintaining the linearity of the system 10.

As indicated above, an optical amplifier 22 can be incorporated into the system 10 to amplify the suppressed optical signal ("λ"). The use of an optical amplifier 22, however, is optional. If used, the optical amplifier 22 will preferably be of a type known in the pertinent art as an Erbium Doped Fiber Amplifier (EDFA) that can be incorporated directly into the fiber optic 24.

Referring now to Fig. 3, a closed feedback control loop for positioning the carrier ("λ") of the optical signal, relative to the pass band limit 32 of the filter 20, is shown and is generally designated 42. As shown in Fig. 3, an RF signal "f", which is a carrier for the digital signal 12, is provided as input to the E/O converter 18. Also, provided as input to the E/O converter 18 is an input signal "λ(Tₛₑₜ)" which is the desired operational wavelength, and indicated here to be a function of temperature (T). For purposes of discussing the control loop 42, the output of the E/O converter 18 is then an optical signal which has a wavelength "λ'(T)". Note: at this point in the operation of system 10, the output optical signal "λ'(T)" of the E/O converter 18 has been influenced by ambient temperature of the signal generator (i.e. E/O converter 18). In the event, the influence of this ambient temperature on the input optical signal "λ'(Tₛₑₜ)" is measured at the E/O converter 18 by the thermometer 28, and the result of this influence is transferred to a summing point 44. At the summing point 44, T' is compared with the desired temperature Tₛₑₜ for adjusting the wavelength "λ" for an operation of the system 10 (e.g. point 46 in Fig. 2). Based on this comparison, an error signal "e" is generated. Computer 26 then operates the tuner 30 to adjust the E/O converter 18 and thereby minimize the error signal "e" to maintain operation of the system 10 at the point 46.

While the particular System and Method for Filtering an Optical Signal to Avoid Fading and to Optimize Linearity as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. A system for filtering an optical signal for transmission of the signal over a fiber optic which comprises:
a terminal for generating the optical signal, wherein the optical signal includes a carrier having a wavelength "λ", with an upper sideband and a lower sideband;
a filter defined by a pass band limit, wherein the limit establishes a transmit decibel (dB) level based on changes in wavelength and is **characterized by** a central region with a substantially flat pass band limit located between a lower region with a positively sloped pass band limit, and an upper region with a negatively sloped pass band limit; and
a tuner connected with the terminal for positioning the carrier in a preselected region of the filter having a sloped pass band limit to eliminate a sideband of the optical signal to avoid fading, and to suppress the carrier to enhance the Optical Modulation Index (OMI) for the optical signal.

2. A system as recited in claim 1 wherein the terminal comprises:
a modem for generating a Radio Frequency (RF) signal; and
an Electrical to Optical (E/O) converter for converting the RF signal to an optical signal having the carrier "λ".

3. A system as recited in claim 2 wherein the tuner is a Thermo-Electric Cooler (TEC) and is connected with the E/O converter to vary "λ" of the optical signal to position and maintain the carrier in the preselected region of the filter.

4. A system as recited in any preceding claim wherein the preselected region is the upper region with a negatively sloped pass band limit.

5. A system as recited in any preceding claim wherein the negatively sloped pass band limit of the upper region is **characterized by** a decrease in dB level, with an increase in wavelength "λ" of the carrier, to suppress the dB level of the carrier in the optical signal.

6. A system as recited in any preceding claim further comprising an optical amplifier for amplifying the transmitted optical signal.

7. A system as recited in claim 6 wherein the amplifier is an Erbium Doped Fiber Amplifier (EDFA).

8. A system as recited in any preceding claim wherein the pass band upper limit of the central region is flat and has a substantially constant dB value greater than 25 dB.

9. A system as recited in claim 8 wherein the slope of the upper region of the filter causes around 1.4 dB loss in the carrier per 0.01 nm increase in the wavelength "λ" of the carrier.

10. A system as recited in any preceding claim wherein the carrier is suppressed by the filter to obtain an improved OMI and an improved linearity for the optical signal transmitted by the system.

11. A system as recited in any preceding claim wherein the modem is a digitized synthesizer.

12. A system for transmitting an optical signal which comprises:
a terminal for generating the optical signal, wherein the optical signal includes a carrier having a wavelength "λ", with an upper sideband and a lower sideband;
a thermometer connected to the terminal for measuring an ambient temperature of the O/E converter;
a filter defined by a pass band limit, wherein the filter is positioned to receive the optical signal from the terminal, and wherein the pass band limit establishes a transmit decibel (dB) level depending on the wavelength "λ" of the carrier;
a tuner connected with the terminal for varying the wavelength "λ" of the carrier of the optical signal in response to changes in the ambient temperature of the O/E converter; and
a computer connected to the thermometer for comparing an ambient temperature of the O/E converter with a desired temperature set point to generate an error signal, and wherein the computer is connected to the tuner to minimize the error signal by varying the ambient temperature of the O/E converter and the corresponding carrier wavelength "λ" of the optical signal to position the carrier of the optical signal relative to the pass band limit of the filter to eliminate a sideband of the optical signal and avoid fading, and to suppress the carrier of the optical signal to enhance the Optical Modulation Index (OMI) and linearity of the optical signal.

13. A method for transmitting an optical signal which comprises the steps of:
generating the optical signal, wherein the optical signal includes a carrier having a wavelength "λ", with an upper sideband and a lower sideband;
measuring an ambient temperature of the O/E converter;
defining a pass band limit for a filter, wherein the pass band limit establishes a transmit decibel (dB) level for the optical signal depending on the wavelength "λ" of the carrier;
positioning the filter to receive the optical signal; and
varying the wavelength "λ" of the carrier of the optical signal in response to changes in the ambient temperature of the E/O converter to position the carrier of the optical signal relative to the pass band limit of the filter to eliminate a sideband of the optical signal to avoid fading, and to suppress the carrier of the optical signal to enhance the Optical Modulation Index (OMI) for the optical signal.

14. A method as recited in claim 13 wherein the generating step further comprises the steps of:
providing a modem for generating a Radio Frequency (RF) signal; and
using an Electrical to Optical (E/O) converter for converting the RF signal to the optical signal having the carrier "λ".

15. A method as recited in claim 14 wherein the defining step establishes the pass band limit with a central region having a substantially flat pass band limit located between a lower region with a positively sloped pass band limit, and an upper region with a negatively sloped pass band limit.
